# EUROPEAN PATENT APPLICATION

(11) **EP 2 894 180 A1**
(43) Date of publication of application: **15.07.2015**
(21) Application number: 14150493.6
(22) Date of filing: 08.01.2014
(51) Int. Cl.: C08G 18/63, C08F 283/02, C08F 283/06, C08G 18/40

(54) **Polymer Polyols comprising a Polyether Carbonate Polyol as the Base Polyol**

(71) Applicant: Bayer MaterialScience AG, 51373 Leverkusen (DE)
(72) Inventor: Hofmann, Jörg, 47800 Krefeld (DE); Hahn, Norbert, 41569 Rommerskirchen (DE); Chamier, Mandy, 41539 Dormagen (DE); Browne, Edward, 50672 Köln (DE)
(74) Representative: BIP Patents

(57) **Abstract**

This invention relates to polymer polyols comprising the free-radical polymerization product of a base polyol, at least one ethylenically unsaturated monomer, and, optionally, a preformed stabilizer, in the presence of at least one free-radical polymerization initiator and at least one chain transfer agent, in which the base polyol is a polyether carbonate polyol. A process for preparing these polymer polyols is also described. The present invention also relates to a polyurethane foam prepared from these polymer polyols and to a process for the preparation of these polyurethane foams.

## Description

This invention relates to polymer polyols that are the free-radical polymerization product of a base polyol, at least one ethylenically unsaturated monomer, and optionally, a preformed stabilizer, in the presence of at least one free-radical polymerization initiator and at least one chain transfer agent, in which the base polyol is comprised of a polyether carbonate polyol. A process for preparing these polymer polyols is also described. The present invention also relates to a polyurethane foam prepared from these polymer polyols and to a process for the preparation of these polyurethane foams.

The preparation of polyether carbonate polyols by catalytic reaction of alkylene oxides (epoxides) and carbon dioxide in the presence of H-functional starter substances ("starters") has been investigated intensively for more than 40 years (e.g. Inoue et al., Copolymerization of Carbon Dioxide and Epoxide with Organometallic Compounds; Die Makromolekulare Chemie 130, 210-220, 1969). This reaction is shown in diagram form in equation (I), wherein R represents an organic radical, such as alkyl, alkylaryl or aryl, each of which can also contain hetero atoms, such as, for example, O, S, Si etc., and wherein e, f and g represent an integer, and wherein the product shown for the polyether carbonate polyol in equation (I) is merely to be understood as meaning that blocks with the structure shown can in principle be found in the polyether carbonate polyol obtained, but the sequence, number and length of the blocks and the OH functionality of the starter can vary and is not limited to the polyether carbonate polyol shown in equation (I). This reaction (see equation (I)) is ecologically very advantageous, since this reaction represents the conversion of a greenhouse gas, such as CO₂, into a polymer. The cyclic carbonate (for example for R = CH₃ propylene carbonate) shown in equation (I) is formed as a further product, actually a by-product.

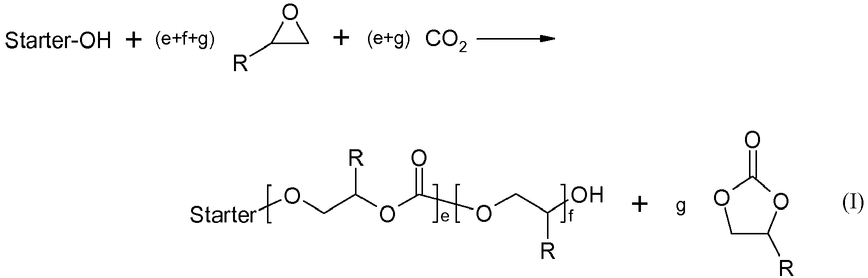

A step in which a part amount of alkylene oxide compound, optionally in the presence of CO₂, and/or an H-functional starter compound, is added to the DMC catalyst and the addition of the alkylene oxide compound is then interrupted, due to a subsequent exothermic chemical reaction an evolution of heat which can lead to a temperature peak ("hot spot"), and due to the reaction of alkylene oxide and optionally CO₂ a drop in pressure in the reactor being observed, is called activation in the context of this invention. The addition of the part amount of the alkylene oxide compound can optionally be carried out in several individual steps, as a rule the occurrence of the evolution of heat being awaited in each step. The process step of activation includes the time span from the start of the addition of the part amount of alkylene oxide compound, optionally in the presence of CO₂, to the DMC catalyst up to the occurrence of the evolution of heat. If the part amount of the alkylene oxide compound is added in several individual steps, the process step of activation includes all the time spans during which the part amounts of the alkylene oxide compound have been added stepwise until the occurrence of the evolution of heat each time. In general, the activation step can be preceded by a step for drying the DMC catalyst and, where appropriate, the H-functional starter at elevated temperature and/or under reduced pressure, where appropriate while passing an inert gas through the reaction mixture

WO-A 2006/065345 discloses polymer polyols and polymer dispersions prepared from vegetable-oil based hydroxyl-containing materials. These polymer polyols have a polyol continuous phase and dispersed polymer particles, in which the polyol continuous phase includes at least one hydroxymethyl-containing polyester polyol which is derived from a fatty acid or a fatty acid ester. In particular, these hydroxymethyl-containing polyester polyols are prepared by reacting a hydroxymethyl group-containing fatty acid having from 12 to 26 carbon atoms, or an ester thereof, with an alcohol or amine initiator compound having an average of at least one hydroxyl or primary/second amine group per molecule. The resultant hydroxymethyl polyester polyol contains an average of at least 1.3 repeating units derived from hydroxymethyl-group-containing fatty acid or ester per total number of hydroxyl, primary/secondary amine groups in the initiator compound and has an equivalent weight of at least 400 to 15,000.

It was an object of the present invention to provide a process for producing stable and low viscosity polymer polyols with a high content of CO₂ incorporated into the polymer that can be substituted for largely petrochemical based polymer polyols in the manufacture of high quality urethane foams.

The present invention relates to polymer polyols comprising the free-radical polymerization product of:
(1) a base polyol of one or more polyether carbonate polyols,
(2) at least one ethylenically unsaturated monomer,
(3) optionally, a preformed stabilizer,
(4) in the presence of at least one free-radical polymerization initiator, and
(5) optionally, one or more chain transfer agents.

The present invention also relates to a process for preparing these polymer polyols. This process comprises free-radically polymerizing (1) a base polyol as described above, (2) at least one ethylenically unsaturated monomer, and, optionally, (3) a preformed stabilizer, in the presence of (4) at least one free-radical polymerization initiator, and, optionally, (5) one or more chain transfer agents.

The present invention also relates to a polyurethane foam which comprises the reaction product of (A) at least one polyisocyanate component, with (B) an isocyanate-reactive component which comprises the above described polymer polyol, in the presence of (C) at least one blowing agent and (D) at least one catalyst.

In addition, this invention relates to a process for the preparation of these polyurethane foams. This process comprises reacting (A) at least one polyisocyanate component, with (B) an isocyanate-reactive component which comprises the above described polymer polyol, in the presence of (C) at least one blowing agent and (D) at least one catalyst.

As used herein, the following terms shall have the following meanings:

As used herein, the hydroxyl number was determined according to DIN 53240 and is defined as the number of milligrams of potassium hydroxide required for the complete hydrolysis of the fully phthalylated derivative prepared from 1 gram of polyols. The hydroxyl number can also be defined by the equation OH = (56.1 x 1000)/Eq. Wt., wherein "OH" represents the hydroxyl number of the polyol, and "Eq. Wt." represents the average equivalent weight of the polyol.

As used herein, the functionality of the polyol represents the average functionality of the polyol, i.e. the average number of hydroxyl groups per molecule.

As used herein, the term molecular weight refers to the number average molecular weight unless indicated otherwise.

The term "ethylenically unsaturated monomer" means the simple unpolymerized form of a chemical compound having relatively low molecular weight, e.g., acrylonitrile, styrene, methyl methacrylate, and the like.

The phrase "free radically polymerizable ethylenically unsaturated monomer" means a monomer containing ethylenic unsaturation (>C = C<, i.e. two double bonded carbon atoms) that is capable of undergoing free radically induced addition polymerization reactions.

The term "pre-formed stabilizer" is defined as an intermediate obtained by reacting a macromer containing reactive unsaturation (e.g. acrylate, methacrylate, maleate, etc.) with monomers (i.e. acrylonitrile, styrene, methyl methacrylate, etc.), optionally, in a polymer control agent, PCA, (i.e. methanol, isopropanol, toluene, ethylbenzene, etc.) and/or optionally, in a polyol, to give a co-polymer (dispersion having e.g. a low solids content (e.g. <20%), or soluble grafts, etc.).

The term "stability" means the ability of a material to maintain a stable form such as the ability to stay in solution or in suspension.

The phrase "polymer polyol" refers to such compositions which can be produced by polymerizing one or more ethylenically unsaturated monomers dissolved or dispersed in a polyol in the presence of a free radical catalyst to form a stable dispersion of polymer particles in the polyol. These polymer polyols have the valuable property of imparting to, for example, polyurethane foams and elastomers produced therefrom, higher load-bearing properties than are provided by the corresponding unmodified polyols.

As used herein "viscosity" is in mPa * s measured at 25°C on a Physica MCR 51, manufacturer: Anton Paar at a shear rate of 5 s⁻¹ according to DIN 53018.

Suitable polyols to be used as the base polyol, i.e. component (1), in the present invention include those base polyols of one or more polyether carbonate polyols. The polyether carbonate polyols are preferably prepared from one or more H-functional starter compounds, one or more alkylene oxides and carbon dioxide in the presence of a DMC catalyst, and wherein in a more preferred embodiment
(α) the H-functional starter substance or a mixture of at least two H-functional starter substances is initially introduced into the reaction vessel and, where appropriate, water and/or other readily volatile compounds are removed by elevated temperature and/or reduced pressure ("drying"), the DMC catalyst being added to the H-functional starter substance or the mixture of at least two H-functional starter substances before or after the drying,
(β) for the activation, a part amount (based on the total amount of the amount of alkylene oxides employed in steps (β) and (γ)) of one or more alkylene oxides is added to the mixture resulting from step (α), it being possible for this addition of a part amount of alkylene oxide optionally to be carried out in the presence of CO₂ and/or an inert gas (such as, for example, nitrogen or argon), and it also being possible for step (β) to be carried out several times for the activation,
(γ) one or more alkylene oxides and carbon dioxide are metered continuously into the mixture resulting from step (β) ("copolymerization"), the alkylene oxides employed for the copolymerization being identical to or different from the alkylene oxides employed in step (β).

In an even more preferred embodiment, the amount of one or more alkylene oxides employed in the activation in step (β) is 0.1 to 25.0 wt.%, preferably 1.0 to 20.0 wt.%, particularly preferably 2.0 to 16.0 wt.% (based on the amount of starter compound employed in step (α)). The alkylene oxide can be added in one step or stepwise in several part amounts. The DMC catalyst is preferably employed in an amount such that the content of DMC catalyst in the resulting polyether carbonate polyol is 10 to 10,000 ppm, particularly preferably 20 to 5,000 ppm and most preferably 50 to 500 ppm.

### Step (α):

The addition of the individual components in step (α) can be carried out simultaneously or successively in any desired sequence; preferably, DMC catalyst is first initially introduced into the reaction vessel in step (α) and the H-functional starter compound is added simultaneously or subsequently.

A preferred embodiment provides a process wherein in step (α)
(α1) the DMC catalyst and one or more H-functional starter compounds are initially introduced into a reactor,
(α2) an inert gas (for example nitrogen or a noble gas, such as argon), an inert gas/carbon dioxide mixture or carbon dioxide is passed through the reactor at a temperature of from 50 to 200 °C, preferably from 80 to 160 °C, particularly preferably from 125 to 135 °C, and a reduced pressure (absolute) of from 10 mbar to 800 mbar, preferably from 40 mbar to 200 mbar, is simultaneously established in the reactor ("drying") by removal of the inert gas or carbon dioxide (for example with a pump).

A further preferred embodiment provides a process wherein in step (α)
(α1) the H-functional starter compound or a mixture of at least two H-functional starter compounds is initially introduced into the reaction vessel, optionally under an inert gas atmosphere (for example nitrogen or argon), under an atmosphere of an inert gas/carbon dioxide mixture or under a pure carbon dioxide atmosphere, particularly preferably under an inert gas atmosphere (for example nitrogen or argon), and
(α2) an inert gas (for example nitrogen or a noble gas, such as argon), an inert gas/carbon dioxide mixture or carbon dioxide, particularly preferably an inert gas (for example nitrogen or argon), is passed into the resulting mixture of DMC catalyst and one or more H-functional starter compounds at a temperature of from 50 to 200 °C, preferably from 80 to 160 °C, particularly preferably from 125 to 135 °C, and a reduced pressure (absolute) of from 10 mbar to 800 mbar, preferably from 40 mbar to 200 mbar, is simultaneously established in the reactor by removal of the inert gas or carbon dioxide (for example with a pump),
the double metal cyanide catalyst being added to the H-functional starter substance or the mixture of at least two H-functional starter substances in step (α1) or immediately subsequently in step (α2).

The DMC catalyst can be added in the solid form or as a suspension in an H-functional starter compound. If the DMC catalyst is added as a suspension, this is preferably added to the one or more H-functional starter compounds in step (α1).

### Step (β):

The activation step (step (β)) can be carried out in the presence of CO₂ and/or an inert gas (such as, for example, nitrogen or argon). Preferably, step (β) is carried out under an atmosphere of an inert gas/carbon dioxide mixture (for example nitrogen/carbon dioxide mixture or argon/carbon dioxide mixture) or a carbon dioxide atmosphere, particularly preferably under a carbon dioxide atmosphere. The establishing of an atmosphere of an inert gas/carbon dioxide mixture (for example nitrogen/carbon dioxide mixture or argon/carbon dioxide mixture) or a carbon dioxide atmosphere and the metering of one or more alkylene oxides can in principle be carried out in various ways. The prepressure is preferably established by passing in carbon dioxide, the pressure (absolute) being 10 mbar to 100 bar, preferably 100 mbar to 50 bar and preferably 500 mbar to 50 bar. The start of the metering of the alkylene oxide can take place from the vacuum or under a previously selected prepressure. In step (β), preferably, a range of from 10 mbar to 100 bar, preferably 100 mbar to 50 bar and preferably 500 mbar to 50 bar is established as the overall pressure (absolute) of the atmosphere of an inert gas/carbon dioxide mixture (for example nitrogen/carbon dioxide mixture or argon/carbon dioxide mixture) or of a carbon dioxide atmosphere and optionally alkylene oxide. During or after the metering of the alkylene oxide, the pressure is adjusted, where appropriate, by passing in further carbon dioxide, the pressure (absolute) being 10 mbar to 100 bar, preferably 100 mbar to 50 bar and preferably 500 mbar to 50 bar.

### Step (γ):

The metering of one or more alkylene oxides and of the carbon dioxide can be carried out simultaneously, alternately or sequentially, it being possible for the total amount of carbon dioxide to be added all at once or by metering over the reaction time. It is possible to increase or to lower, gradually or stepwise, or to leave constant the CO₂ pressure during the addition of the alkylene oxide. Preferably, the overall pressure is kept constant during the reaction by topping up with carbon dioxide. The metering of one or more alkylene oxides or the CO₂ is carried out simultaneously with or alternately or sequentially to the carbon dioxide metering. It is possible to meter the alkylene oxide with a constant metering rate or to increase or to lower the metering rate gradually or stepwise or to add the alkylene oxide in portions. Preferably, the alkylene oxide is added to the reaction mixture with a constant metering rate. If several alkylene oxides are employed for the synthesis of the polyether carbonate polyols, the alkylene oxides can be metered in individually or as a mixture. The metering of the alkylene oxides can be carried out simultaneously, alternately or sequentially via in each case separate metering operations (additions), or via one or more metering operations, it being possible for the alkylene oxides to be metered in individually or as a mixture. Via the nature and/or the sequence of the metering of the alkylene oxides and/or of the carbon dioxide, it is possible to synthesize random, alternating, block-like or gradient-like polyether carbonate polyols.

Preferably, an excess of carbon dioxide, based on the calculated amount of carbon dioxide incorporated in the polyether carbonate polyol, is employed, since due to the slowness of carbon dioxide to react an excess of carbon dioxide is advantageous. The amount of carbon dioxide can be determined via the overall pressure under the particular reaction conditions. The range of from 0.01 to 120 bar, preferably 0.1 to 110 bar, particularly preferably from 1 to 100 bar has proved to be advantageous as the overall pressure (absolute) for the copolymerization for the preparation of the polyether carbonate polyols. It is possible to feed in the carbon dioxide continuously or discontinuously. This depends on how rapidly the alkylene oxides and the CO₂ are consumed, and on whether the product is optionally to contain CO₂-free polyether blocks or blocks with a varying CO₂ content. The amount of carbon dioxide (stated as the pressure) can equally be varied during the addition of the alkylene oxides. Depending on the reaction conditions chosen, it is possible to pass the CO₂ into the reactor in the gaseous, liquid or supercritical state. CO₂ can also be added to the reactor as a solid and can then pass into the gaseous, dissolved, liquid and/or supercritical state under the reaction conditions chosen.

It has furthermore been found for the process according to the invention that the copolymerization (step (γ)) for the preparation of the polyether carbonate polyols is advantageously carried out at 50 to 150 °C, preferably at 60 to 145 °C, particularly preferably at 70 to 140 °C and very particularly preferably at 90 to 130 °C. Below 50 °C, the reaction proceeds only very slowly. At temperatures above 150 °C the amount of undesirable by-products increases greatly.

The three steps α, β and γ can be carried out in the same reactor or in each case separately in different reactors. Particularly preferred reactor types are stirred tank, tube reactor and loop reactor. If reactions steps α, β and γ are carried out in different reactors, a different reactor type can be used for each step.

In a further embodiment of the presently claimed invention the preparation of the polyether carbonate polyols is carried out according to the CAOS-process ("continuous addition of starter"). CAOS-process means that either part of the amount of the H-functional starter compound(s) or the total of the amount of the H-functional starter compound(s) is added together with the alkylene oxides continuously into the reactor in the presence of carbon dioxide and DMC catalyst. In an preferred embodiment of the presently claimed invention the CAOS-process is carried out according to either the Semibatch-CAOS process or according to the conti-CAOS process, as described in detailed in WO-A 2008/092767, PCT/EP2013/073157, PCT/EP2013/067580, PCT/EP2013/067578 and EP application number 13189805.8 which are herein incorporated by reference.

Polyether carbonate polyols can be prepared in a stirred tank, the stirred tank being cooled via the reactor jacket, internal cooling surfaces and/or cooling surfaces in a pumped circulation, depending on the embodiment and mode of operation. Both in the semi-batch use, in which the product is removed only after the end of the reaction, and in the continuous use, in which the product is removed continuously, attention is to be paid in particular to the metering rate of the alkylene oxide. It is to be adjusted such that in spite of the inhibiting action of the carbon dioxide, the alkylene oxides react sufficiently rapidly. The concentration of free alkylene oxides in the reaction mixture during the activation step (step β) is preferably > 0 to 100 wt.%, particularly preferably > 0 to 50 wt.%, most preferably > 0 to 20 wt.% (in each case based on the weight of the reaction mixture). The concentration of free alkylene oxides in the reaction mixture during the reaction (step γ) is preferably > 0 to 40 wt.%, particularly preferably > 0 to 25 wt.%, most preferably > 0 to 15 wt.% (in each case based on the weight of the reaction mixture).

The polyether carbonate polyols suitable in the invention preferably have an OH functionality (i.e. average number of OH groups per molecule) of at least 0.8, preferably of from 1 to 8, particularly preferably from 1 to 6 and very particularly preferably from 2 to 4. The molecular weight is at least 400, preferably 400 to 1,000,000 g/mol and particularly preferably 500 to 60,000 g/mol.

Generally, alkylene oxides (epoxides) having 2 - 45 carbon atoms can be employed for the preparation of the polyether carbonate polyols. The alkylene oxides having 2 - 45 carbon atoms are, for example, one or more compounds chosen from the group consisting of ethylene oxide, propylene oxide, 1-butene oxide, 2,3-butene oxide, 2-methyl-1,2-propene oxide (isobutene oxide), 1-pentene oxide, 2,3-pentene oxide, 2-methyl-1,2-butene oxide, 3-methyl-1,2-butene oxide, 1-hexene oxide, 2,3-hexene oxide, 3,4-hexene oxide, 2-methyl-1,2-pentene oxide, 4-methyl-1,2-pentene oxide, 2-ethyl-1,2-butene oxide, 1-heptene oxide, 1-octene oxide, 1-nonene oxide, 1-decene oxide, 1-undecene oxide, 1-dodecene oxide, 4-methyl-1,2-pentene oxide, butadiene monoxide, isoprene monoxide, cyclopentene oxide, cyclohexene oxide, cycloheptene oxide, cyclooctene oxide, styrene oxide, methylstyrene oxide, pinene oxide, mono- or polyepoxidized fats as mono-, di- and triglycerides, epoxidized fatty acids, C₁-C₂₄ esters of epoxidized fatty acids, epichlorohydrin, glycidol, and derivatives of glycidol, such as, for example, methyl glycidyl ether, ethyl glycidyl ether, 2-ethylhexyl glycidyl ether, allyl glycidyl ether, glycidyl methacrylate and epoxide-functional alkyloxysilanes, such as, for example, 3-glycidyloxypropyltrimethoxysilane, 3-glycidyloxypropyltriethoxysilane, 3-glycidyloxypropyl-tripropoxysilane, 3-glycidyloxypropylmethyldimethoxysilane, 3-glycidyloxypropylethyl-diethoxysilane and 3-glycidyloxypropyltriisopropoxysilane. Preferably, ethylene oxide and/or propylene oxide, in particular propylene oxide, are employed as alkylene oxides.

Compounds with H atoms which are active for the alkoxylation can be employed as suitable H-functional starter compounds. Groups which have active H atoms and are active for the alkoxylation are, for example, -OH, -NH₂ (primary amines), -NH- (secondary amines), -SH, and -CO₂H, and -OH and -NH₂ are preferred and -OH is particularly preferred. The H-functional starter substance employed is, for example, one or more compounds chosen from the group consisting of mono- or polyfunctional alcohols, polyfunctional amines, polyfunctional thiols, amino alcohols thioalcohols, hydroxy esters, polyether polyols, polyester polyols, polyester ether polyols, polyether carbonate polyols, polycarbonate polyols, polycarbonates, polyethyleneimines, polyether-amines (e.g. so-called Jeffamine^{®} from Huntsman, such as e.g. D-230, D-400, D-2000, T-403, T-3000, T-5000 or corresponding products of BASF, such as e.g. Polyetheramin D230, D400, D200, T403, T5000), polytetrahydrofurans (e.g. PolyTHF^{®} of BASF, such as e.g. PolyTHF^{®} 250, 650S, 1000, 1000S, 1400, 1800, 2000), polytetrahydrofuranamines (BASF product Polytetrahydrofuranamin 1700), polyether thiols, polyacrylate polyols, castor oil, the mono- or diglyceride of ricinoleic acid, monoglycerides of fatty acids, chemically modified mono-, di and/or triglycerides of fatty acids, and C₁-C₂₄-alkyl fatty acid esters which contain on average at least 2 OH groups per molecule. By way of example, the C₁-C₂₄-alkyl fatty acid esters which contain on average at least 2 OH groups per molecule are commercial products such as Lupranol Balance^{®} (BASF AG), Merginol^{®} types (Hobum Oleochemicals GmbH), Sovermol^{®} types (Cognis Deutschland GmbH & Co. KG) and Soyol^{®}TM types (USSC Co.).

Monofunctional starter compounds which can be employed are alcohols, amines, thiols and carboxylic acids. Monofunctional alcohols which can be used are: methanol, ethanol, 1-propanol, 2-propanol, 1-butanol, 2-butanol, *tert*-butanol, 3-buten-1-ol, 3-butyn-1-ol, 2-methyl-3-buten-2-ol, 2-methyl-3-butyn-2-ol, propargyl alcohol, 2-methyl-2-propanol, 1-*tert*-butoxy-2-propanol, 1-pentanol, 2-pentanol, 3-pentanol, 1-hexanol, 2-hexanol, 3-hexanol, 1-heptanol, 2-heptanol, 3-heptanol, 1-octanol, 2-octanol, 3-octanol, 4-octanol, phenol, 2-hydroxybiphenyl, 3-hydroxybiphenyl, 4-hydroxybiphenyl, 2-hydroxypyridine, 3-hydroxypyridine, 4-hydroxypyridine. Possible monofunctional amines are: butylamine, *tert*-butylamine, pentylamine, hexylamine, aniline, aziridine, pyrrolidine, piperidine, morpholine. Monofunctional thiols which can be used are: ethanethiol, 1-propanethiol, 2-propanethiol, 1-butanethiol, 3-methyl-1-butanethiol, 2-butene-1-thiol, thiophenol. Monofunctional carboxylic acids which may be mentioned are: formic acid, acetic acid, propionic acid, butyric acid, fatty acids, such as stearic acid, palmitic acid, oleic acid, linoleic acid, linolenic acid, benzoic acid, acrylic acid.

Polyfunctional alcohols which are suitable as H-functional starter substances are, for example, difunctional alcohols (such as, for example, ethylene glycol, diethylene glycol, propylene glycol, dipropylene glycol, 1,3-propanediol, 1,4-butanediol, 1,4-butenediol, 1,4-butynediol, neopentyl glycol, 1,5-pentanediol, methylpentanediols (such as, for example, 3-methyl-1,5-pentanediol), 1,6-hexanediol, 1,8-octanediol, 1,10-decanediol, 1,12-dodecanediol, bis-(hydroxymethyl)-cyclohexanes (such as, for example, 1,4-bis-(hydroxymethyl)cyclohexane), triethylene glycol, tetraethylene glycol, polyethylene glycols, dipropylene glycol, tripropylene glycol, polypropylene glycols, dibutylene glycol and polybutylene glycols); trifunctional alcohols (such as, for example, trimethylolpropane, glycerol, trishydroxyethyl isocyanurate, castor oil); tetrafunctional alcohols (such as, for example, pentaerythritol); polyalcohols (such as, for example, sorbitol, hexitol, sucrose, starch, starch hydrolysates, cellulose, cellulose hydrolysates, hydroxy-functionalized fats and oils, in particular castor oil), and all modification products of these abovementioned alcohols with various amounts of ε-caprolactone.

The H-functional starter substances can also be chosen from the substance class of polyether polyols, in particular those with a molecular weight Mₙ in the range of from 100 to 4,000 g/mol. Polyether polyols which are built up from recurring ethylene oxide and propylene oxide units are preferred, preferably with a content of from 35 to 100 % of propylene oxide units, particularly preferably with a content of from 50 to 100 % of propylene oxide units. These can be random copolymers, gradient copolymers or alternating or block copolymers of ethylene oxide and propylene oxide. Suitable polyether polyols built up from recurring propylene oxide and/or ethylene oxide units are, for example, the Desmophen^{®}, Acclaim^{®}, Arcol^{®}, Baycoll^{®}, Bayfill^{®}, Bayflex^{®}, Baygal^{®}, PET^{®} and polyether polyols of Bayer MaterialScience AG (such as e.g. Desmophen^{®} 3600Z, Desmophen^{®} 1900U, Acclaim^{®} Polyol 2200, Acclaim^{®} Polyol 4000I, Arcol^{®} Polyol 1004, Arcol^{®} Polyol 1010, Arcol^{®} Polyol 1030, Arcol^{®} Polyol 1070, Baycoll^{®} BD 1110, Bayfill^{®} VPPU 0789, Baygal^{®} K55, PET^{®} 1004, Polyether^{®} S180). Further suitable homo-polyethylene oxides are, for example, the Pluriol^{®} E brands of BASF SE, suitable homo-propylene oxides are, for example, the Pluriol^{®} P brands of BASF SE, and suitable mixed copolymers of ethylene oxide and propylene oxide are, for example, the Pluronic^{®} PE or Pluriol^{®} RPE brands of BASF SE.

The H-functional starter substances can also be chosen from the substance class of polyester polyols, in particular those with a molecular weight Mₙ in the range of from 200 to 4,500 g/mol. At least difunctional polyesters are employed as polyester polyols. Polyester polyols preferably comprise alternating acid and alcohol units. Acid components which are employed are e.g. succinic acid, maleic acid, maleic anhydride, adipic acid, phthalic anhydride, phthalic acid, isophthalic acid, terephthalic acid, tetrahydrophthalic acid, tetrahydrophthalic anhydride, hexahydrophthalic anhydride or mixture of the acids and/or anhydrides mentioned. Alcohol components which are used are e.g. ethanediol, 1,2-propanediol, 1,3-propanediol, 1,4-butanediol, 1,5-pentanediol, neopentyl glycol, 1,6-hexanediol, 1,4-bis-(hydroxymethyl)-cyclohexane, diethylene glycol, dipropylene glycol trimethylolpropane, glycerol, pentaerythritol or mixtures of the alcohols mentioned. If difunctional or polyfunctional polyether polyols are employed as the alcohol component, polyester ether polyols, which can likewise serve as starter substances for the preparation of the polyether carbonate polyols, are obtained. Preferably, polyether polyols with Mₙ = 150 to 2,000 g/mol are employed for the preparation of the polyester-ether polyols.

Polycarbonate diols can furthermore be employed as H-functional starter substances, in particular those with a molecular weight Mₙ in the range of from 150 to 4,500 g/mol, preferably 500 to 2,500, which are prepared, for example, by reaction of phosgene, dimethyl carbonate, diethyl carbonate or diphenyl carbonate and difunctional alcohols or polyester polyols or polyether polyols. Examples of polycarbonates are to be found e.g. in EP-A 1359177. For example, the Desmophen^{®} C types of Bayer MaterialScience AG, such as e.g. Desmophen^{®} C 1100 or Desmophen^{®} C 2200, can be used as polycarbonate diols.

Polyether carbonate polyols can be employed as H-functional starter substances. In particular, polyether carbonate polyols which are obtainable by the addition of carbon dioxide and alkylene oxides on to H-functional starter compounds in the presence of a DMC catalyst are employed. These polyether carbonate polyols employed as H-functional starter substances are prepared beforehand for this in a separate reaction step.

The H-functional starter substances in general have an OH functionality (i.e. number of H atoms per molecule which are active for the polymerization) of from 1 to 8, preferably from 2 to 6 and particularly preferably from 2 to 4. The H-functional starter substances are employed either individually or as a mixture of at least two H-functional starter substances.

Preferred H-functional starter substances are alcohols of the general formula (II)

HO-(CH₂)ₓ-OH (II)

wherein x is a number from 1 to 20, preferably an even number from 2 to 20. Examples of alcohols according to formula (II) are ethylene glycol, 1,4-butanediol, 1,6-hexanediol, 1,8-octanediol, 1,10-decanediol and 1,12-dodecanediol. Further preferred H-functional starter substances are neopentyl glycol, trimethylolpropane, glycerol, pentaerythritol, reaction products of the alcohols according to formula (II) with ε-caprolactone, e.g. reaction products of trimethylolpropane with ε-caprolactone, reaction products of glycerol with ε-caprolactone and reaction products of pentaerythritol with ε-caprolactone. H-functional starter compounds which are furthermore preferably employed are water, diethylene glycol, dipropylene glycol, castor oil, sorbitol and polyether polyols built up from recurring polyalkylene oxide units.

The H-functional starter substances are particularly preferably one or more compounds chosen from the group consisting of ethylene glycol, propylene glycol, 1,3-propanediol, 1,3-butanediol, 1,4-butanediol, 1,5-pentanediol, 2-methylpropane-1,3-diol, neopentyl glycol, 1,6-hexanediol, diethylene glycol, dipropylene glycol, glycerol, trimethylolpropane, di- and trifunctional polyether polyols, wherein the polyether polyol is built up from a di- or tri-H-functional starter compound and propylene oxide or a di- or tri-H-functional starter compound, propylene oxide and ethylene oxide. The polyether polyols preferably have an OH functionality of from 2 to 4 and molecular weight Mₙ in the range of from 62 to 4,500 g/mol, and in particular a molecular weight Mₙ in the range of from 62 to 3,000 g/mol.

The preparation of the polyether carbonate polyols is carried out by catalytic addition of carbon dioxide and alkylene oxides on to H-functional starter substances. In the context of the invention, "H-functional" is understood as meaning the number of H atoms per molecule of the starter compound which are active for the alkoxylation.

DMC catalysts for use in the homopolymerization of alkylene oxides are known in principle from the prior art (see e.g. US-A 3 404 109, US-A 3 829 505, US-A 3 941 849 and US-A 5 158 922). DMC catalysts which are described e.g. in US-A 5 470 813, EP-A 700 949, EP-A 743 093, EP-A 761 708, WO 97/40086, WO 98/16310 and WO 00/47649 have a very high activity and render possible the preparation of polyether carbonate polyols at very low catalyst concentrations. The highly active DMC catalysts described in EP-A 700 949, which, in addition to a double metal cyanide compound (e.g. zinc hexacyanocobaltate(III)) and an organic complexing ligand (e.g. *tert*-butanol), also contain a polyether with a number-average molecular weight of greater than 500 g/mol, are a typical example.

The DMC catalysts suitable for the preparation of the polyether carbonate polyols are preferably obtained by a procedure in which
(a) in the first step an aqueous solution of a metal salt is reacted with the aqueous solution of a metal cyanide salt in the presence of one or more organic complexing ligands, e.g. of an ether or alcohol,
(b) wherein in the second step the solid is separated off by known techniques (such as centrifugation or filtration) from the suspension obtained from (a),
(c) wherein, if appropriate, in a third step the solid which has been isolated is washed with an aqueous solution of an organic complexing ligand (e.g. by resuspending and subsequent renewed isolation by filtration or centrifugation),
(d) wherein the solid obtained, if appropriate after pulverization, is subsequently dried at temperatures of in general 20 - 120 °C and under pressures of from in general 0.1 mbar to normal pressure (1013 mbar),
and wherein in the first step or immediately after the precipitation of the double metal cyanide compound (second step), one or more organic complexing ligands, preferably in excess (based on the double metal cyanide compound), and optionally further complexing components are added.

The double metal cyanide compounds contained in the DMC catalysts according to the invention are the reaction products of water-soluble metal salts and water-soluble metal cyanide salts.

For example, an aqueous solution of zinc chloride (preferably in excess, based on the metal cyanide salt, such as, for example, potassium hexacyanocobaltate) and potassium hexacyanocobaltate are mixed and dimethoxyethane (glyme) or *tert*-butanol (preferably in excess, based on zinc hexacyanocobaltate) is then added to the suspension formed.

Metal salts which are suitable for the preparation of the double metal cyanide compounds preferably have the general formula (III)

M(X)ₙ (III)

wherein
M is chosen from the metal cations Zn²⁺, Fe²⁺, Ni²⁺, Mn²⁺, Co²⁺, Sr²⁺, Sn²⁺, Pb²⁺ and Cu²⁺, preferably M is Zn²⁺, Fe²⁺, Co²⁺ or Ni²⁺,
X are one or more (i.e. different) anions, preferably an anion chosen from the group of halides (i.e. fluoride, chloride, bromide, iodide), hydroxide, sulfate, carbonate, cyanate, thiocyanate, isocyanate, isothiocyanate, carboxylate, oxalate and nitrate;
n is 1 if X = sulfate, carbonate or oxalate and
n is 2 if X = halide, hydroxide, carboxylate, cyanate, thiocyanate, isocyanate, isothiocyanate or nitrate,
or suitable metal salts have the general formula (IV)

Mᵣ(X)₃ (IV)

wherein
M is chosen from the metal cations Fe³⁺, Al³⁺, Co³⁺ and Cr³⁺,
X are one or more (i.e. different) anions, preferably an anion chosen from the group of halides (i.e. fluoride, chloride, bromide, iodide), hydroxide, sulfate, carbonate, cyanate, thiocyanate, isocyanate, isothiocyanate, carboxylate, oxalate and nitrate;
r is 2 if X = sulfate, carbonate or oxalate and
r is 1 if X = halide, hydroxide, carboxylate, cyanate, thiocyanate, isocyanate, isothiocyanate or nitrate,
or suitable metal salts have the general formula (V)

M(X)ₛ (V)

wherein
M is chosen from the metal cations Mo⁴⁺, V⁴⁺ and W⁴⁺
X are one or more (i.e. different) anions, preferably an anion chosen from the group of halides (i.e. fluoride, chloride, bromide, iodide), hydroxide, sulfate, carbonate, cyanate, thiocyanate, isocyanate, isothiocyanate, carboxylate, oxalate and nitrate;
s is 2 if X = sulfate, carbonate or oxalate and
s is 4 if X = halide, hydroxide, carboxylate, cyanate, thiocyanate, isocyanate, isothiocyanate or nitrate,
or suitable metal salts have the general formula (VI)

M(X)ₜ (VI)

wherein
M is chosen from the metal cations Mo⁶⁺ and W⁶⁺
X are one or more (i.e. different) anions, preferably an anion chosen from the group of halides (i.e. fluoride, chloride, bromide, iodide), hydroxide, sulfate, carbonate, cyanate, thiocyanate, isocyanate, isothiocyanate, carboxylate, oxalate and nitrate;
t is 3 if X = sulfate, carbonate or oxalate and
t is 6 if X = halide, hydroxide, carboxylate, cyanate, thiocyanate, isocyanate, isothiocyanate or nitrate.

Examples of suitable metal salts are zinc chloride, zinc bromide, zinc iodide, zinc acetate, zinc acetylacetonate, zinc benzoate, zinc nitrate, iron(II) sulfate, iron(II) bromide, iron(II) chloride, iron(III) chloride, cobalt(II) chloride, cobalt(II) thiocyanate, nickel(II) chloride and nickel(II) nitrate. Mixtures of various metal salts can also be employed.

Metal cyanide salts which are suitable for the preparation of the double metal cyanide compounds preferably have the general formula (VII)

(Y)ₐ M'(CN)_{b} (A)_{c} (VII)

wherein
M' is chosen from one or more metal cations of the group consisting of Fe(II), Fe(III), Co(II), Co(III), Cr(II), Cr(III), Mn(II), Mn(III), Ir(III), Ni(II), Rh(III), Ru(II), V(IV) and V(V), preferably M' is one or more metal cations of the group consisting of Co(II), Co(III), Fe(II), Fe(III), Cr(III), Ir(III) and Ni(II),
Y is chosen from one or more metal cations of the group consisting of alkali metal (i.e. Li⁺, Na⁺, K⁺, Rb⁺) and alkaline earth metal (i.e. Be²⁺, Mg²⁺, Ca²⁺, Sr²⁺, Ba²⁺),
A is chosen from one or more anions of the group consisting of halides (i.e. fluoride, chloride, bromide, iodide), hydroxide, sulfate, carbonate, cyanate, thiocyanate, isocyanate, isothiocyanate, carboxylate, azide, oxalate or nitrate and
a, b and c are integers, wherein the values for a, b and c are chosen such that the metal cyanide salt has electroneutrality; a is preferably 1, 2, 3 or 4; b is preferably 4, 5 or 6; c preferably has the value 0.

Examples of suitable metal cyanide salts are sodium hexacyanocobaltate(III), potassium hexacyanocobaltate(III), potassium hexacyanoferrate(II), potassium hexacyanoferrate(III), calcium hexacyanocobaltate(III) and lithium hexacyanocobaltate(III).

Preferred double metal cyanide compounds which the DMC catalysts according to the invention contain are compounds of the general formula (VIII)

Mₓ[M'_{x'}(CN)_{y}]_{z} (VIII),

wherein M is as defined in formula (II) to (VI) and
M' is as defined in formula (VII), and
x, x', y and z are integers and are chosen such that the double metal cyanide compound has electroneutrality.

Preferably
x=3, x' = 1, y = 6 and z = 2,
M = Zn(II), Fe(II), Co(II) or Ni(II) and
M' = Co(III), Fe(III), Cr(III) or Ir(III).

Examples of suitable double metal cyanide compounds are zinc hexacyanocobaltate(III), zinc hexacyanoiridate(III), zinc hexacyanoferrate(III) and cobalt(II) hexacyanocobaltate(III). Further examples of suitable double metal cyanide compounds are to be found e.g. in US 5 158 922 (column 8, lines 29 - 66). Zinc hexacyanocobaltate(III) is particularly preferably used.

The organic complexing ligands added in the preparation of the DMC catalysts are disclosed, for example, in US 5 158 922 (see in particular column 6, lines 9 to 65), US 3 404 109, US 3 829 505, US 3 941 849, EP-A 700 949, EP-A 761 708, JP 4 145 123, US 5 470 813, EP-A 743 093 and WO-A 97/40086). For example, water-soluble, organic compounds with hetero atoms, such as oxygen, nitrogen, phosphorus or sulfur, which can form complexes with the double metal cyanide compound are employed as organic complexing ligands. Preferred organic complexing ligands are alcohols, aldehydes, ketones, ethers, esters, amides, ureas, nitriles, sulfides and mixtures thereof. Particularly preferred organic complexing ligands are aliphatic ethers (such as dimethoxyethane), water-soluble aliphatic alcohols (such as ethanol, isopropanol, n-butanol, isobutanol, sec-butanol, *tert*-butanol, 2-methyl-3-buten-2-ol and 2-methyl-3-butyn-2-ol), and compounds which contain both aliphatic or cycloaliphatic ether groups and aliphatic hydroxyl groups (such as e.g. ethylene glycol mono-*tert*-butyl ether, diethylene glycol mono-*tert*-butyl ether, tripropylene glycol monomethyl ether and 3-methyl-3-oxetane-methanol). Organic complexing ligands which are most preferred are chosen from one or more compounds of the group consisting of dimethoxyethane, *tert*-butanol, 2-methyl-3-buten-2-ol, 2-methyl-3-butyn-2-ol, ethylene glycol mono-*tert*-butyl ether and 3-methyl-3-oxetane-methanol.

One or more complexing component(s) from the compound classes of polyethers, polyesters, polycarbonates, polyalkylene glycol sorbitan esters, polyalkylene glycol glycidyl ethers, polyacrylamide, poly(acrylamide-co-acrylic acid), polyacrylic acid, poly(acrylic acid-co-maleic acid), polyacrylonitrile, polyalkyl acrylates, polyalkyl methacrylates, polyvinyl methyl ether, polyvinyl ethyl ether, polyvinyl acetate, polyvinyl alcohol, poly-N-vinylpyrrolidone, poly(N-vinylpyrrolidone-co-acrylic acid), polyvinyl methyl ketone, poly(4-vinylphenol), poly(acrylic acid-co-styrene), oxazoline polymers, polyalkyleneimines, maleic acid and maleic anhydride copolymers, hydroxyethylcellulose and polyacetals, or of glycidyl ethers, glycosides, carboxylic acid esters of polyfunctional alcohols, bile acids or salts, esters or amides thereof, cyclodextrins, phosphorus compounds, α,β-unsaturated carboxylic acid esters or ionic surface- or interface-active compounds are optionally employed in the preparation of the DMC catalysts.

Preferably, in the first step in the preparation of the DMC catalysts the aqueous solutions of the metal salt (e.g. zinc chloride), employed in a stoichiometric excess (at least 50 mol%, based on the metal cyanide salt, that is to say at least a molar ratio of metal salt to metal cyanide salt of 2.25 to 1.00) and of the metal cyanide salt (e.g. potassium hexacyanocobaltate) are reacted in the presence of the organic complexing ligands (e.g. *tert*-butanol), a suspension which contains the double metal cyanide compound (e.g. zinc hexacyanocobaltate), water, excess metal salt and the organic complexing ligand being formed.

In this context, the organic complexing ligand can be present in the aqueous solution of the metal salt and/or of the metal cyanide salt, or it is added directly to the suspension obtained after precipitation of the double metal cyanide compound. It has proved to be advantageous to mix the aqueous solutions of the metal salt and of the metal cyanide salt and the organic complexing ligand with vigorous stirring. The suspension formed in the first step is then optionally treated with a further complexing component. In this context, the complexing component is preferably employed in a mixture with water and organic complexing ligand. A preferred method for carrying out the first step (i.e. the preparation of the suspension) is carried out employing a mixing nozzle, particularly preferably employing a jet disperser as described in WO-A 01/39883.

In the second step the solid (i.e. the precursor of the catalyst) is isolated from the suspension by known techniques, such as centrifugation or filtration.

In a preferred embodiment variant, in a third process step the solid which has been isolated is subsequently washed with an aqueous solution of the organic complexing ligand (e.g. by resuspending and subsequent renewed isolation by filtration or centrifugation). In this manner, for example, water-soluble by-products, such as potassium chloride, can be removed from the catalyst. Preferably, the amount of organic complexing ligand in the aqueous washing solution is between 40 and 80 wt.%, based on the total solution.

In the third step, further complexing component is optionally added to the aqueous washing solution, preferably in the range of between 0.5 and 5 wt.%, based on the total solution.

In the fourth step, the solid which has been isolated and optionally washed is then dried, optionally after pulverization, at temperatures of in general 20 - 100 °C and under pressures of from in general 0.1 mbar to normal pressure (1013 mbar).

A preferred method for isolating the DMC catalysts according to the invention from the suspension by filtration, washing of the filter cake and drying is described in WO-A 01/80994.

It is also possible for the base polyol to contain a portion of one or more conventional polyether polyols, polyester polyols, polybutadiene polyols, polycaprolactones, polythioethers, polycarbonates, polyacetals, etc. Details on the total amount of polyether carbonate polyols(s) present are set forth above.

Preformed stabilizers, i.e. component (3), are optional in accordance with the present invention. It is, however, preferred that a preformed stabilizer is present in the polymer polyols and process of preparing these polymer polyols. Suitable preformed stabilizers include, for example, those which are known in the art and include without limitation those described in the references discussed herein. Preferred preformed stabilizers include those discussed in, for example, U.S. Patents 4,148,840 (Shah), 5,196,476 (Simroth), 5,364,906 (Critchfield) 5,990,185 (Fogg), 6,013,731 (Holeschovsky et al), 6,455,603 (Fogg), and 7,179,882 (Adkins et al), the disclosures of which are hereby incorporated by reference.

Suitable preformed stabilizers herein include those so-called intermediate obtained by reacting a macromolecule with one or more monomers (i.e. acrylonitrile, styrene, methyl methacrylate, etc.), to give a copolymer (dispersion having a low solids content, e.g. < 25% or soluble grafts, etc.). The macromolecule may be obtained by linkage of polyether polyols through coupling with a material such as a polyisocyanate, epoxy resin, etc. or by other means to produce a high molecular weight polyol. The macromolecule preferably contains reactive unsaturation and is, in general, prepared by the reaction of the selected reactive unsaturated compound with a polyol. The terminology "reactive unsaturated compound," refers to any compound capable of forming an adduct with a polyol, either directly or indirectly, and having carbon-to-carbon double bonds which are adequately reactive with the particular monomer system being utilized. More specifically, compounds containing alpha, beta unsaturation are preferred. Suitable compounds satisfying this criteria include the maleates, fumarates, acrylates, and methacrylates. While not alpha, beta unsaturated compounds, polyol adducts formed from substituted vinyl benzenes, such as chloromethylstyrene, likewise may be utilized. Illustrative examples of suitable alpha, beta unsaturated compounds which may be employed to form the precursor stabilizer include maleic anhydride, fumaric acid, dialkyl fumarates, dialkyl maleates, glycol maleates, glycol fumarates, isocyanatoethyl methacrylate, 1,1-dimethyl-m-isopropenylbenzyl-isocyanate, methyl methacrylate, hydroxyethyl methacrylate, acrylic and methacrylic acid and their anhydride, methacroyl chloride and glycidyl methacrylate. The level of ethylenic unsaturation in the precursor stabilizer may vary widely. The minimum and maximum levels of unsaturation both are constricted by the dispersion stability that the precursor stabilizer is capable of imparting to the polymer polyol composition. The specific level of unsaturation utilized further will depend on the molecular weight and functionality of the polyol used to prepare the precursor stabilizer. Optionally, a diluent, polymer control agent or chain transfer agent (i.e. molecular weight regulator) may also be present.

Typically, the preformed stabilizer of the invention is derived from:
(a) a macromolecule, macromer or other suitable precursor stabilizer;
(b) a free radically polymerizable ethylenically unsaturated monomer, preferably acrylonitrile and at least one other ethylenically unsaturated comonomer copolymerizable therewith;
(c) a free radical polymerization initiator;
(d) optionally, a chain transfer agent in which (a), (b), and (c) are soluble, but in which the resultant preformed stabilizer is essentially insoluble;
   and/or
(e) optionally, one or more polyols.

In general, the amount of the components, on a weight percent of the total formulation, for forming preformed stabilizer is as follows:
(a) 10 to 40, more preferably 15 to 35;
(b) 10 to 30, more preferably 15 to 25;
(c) 0.1 to 2, more preferably 0.1 to 2;
(d) 30 to 80, more preferably 40 to 70;
   and
(e) 0 to 20, more preferably 0 to 10.

In the formulations proposed above for the preformed stabilizer, the %'s by weight of components (a), (b), (c), and optionally (d), and optionally (e), totals 100% by weight of the preformed stabilizer component (3).

Suitable preformed stabilizers for the present invention include those comprising the free radical polymerization product of a free radically polymerizable ethylenically unsaturated monomer, and an adduct of a alcohol having the average formula (IX):

A(OROX)_{≥1} (IX)

wherein A is a polyvalent organic moiety, the free valence of which is ≥ 1, R is the divalent residue comprising an alkylene oxide moiety, and X is one or more of an organic moiety containing reactive unsaturation, copolymerizable with A, and hydrogen, about one of such X is the organic moiety containing reactive unsaturation and the remaining X's are hydrogen, in which the adduct may be further adducted with an organic polyisocyanate.

Suitable compounds to be used as the macromolecule, the macromer or the precursor stabilizer (i.e. component (a) above) include, for example, compounds which contain reactive unsaturation (e.g. acrylate, methacrylate, maleate, fumarate, isopropenylphenyl, vinyl silyl, etc.), obtained by reacting compounds containing reactive unsaturation with alcohols having the average formula A(OROX)_{≥1}. Examples include but are not limited to, maleic anhydride, fumaric acid, dialkyl fumarates, dialkyl maleates, glycol maleates, glycol fumarates, isocyanatoethyl methacrylate, methyl methacrylate, hydroxyethyl methacrylate, acrylic and methacrylic acid and their anhydride, methacryl chloride, and glycidyl methacrylate, vinylmethoxysilane, etc.

The reactive unsaturated compound may also be the reaction product of, for example, hydroxymethyl or hydroxyethyl methacrylate with a polyol by coupling through use of an organic polyisocyanate as described in U.S. Patent 4,521,546, the disclosure of which is herein incorporated by reference, or by reaction with an unsaturated mono-isocyanate such as, for example, 1,1-dimethyl-m-isopropenylbenzyl isocyanate, etc. Other suitable precursor stabilizers compounds are obtained by reacting a silicon atom containing compound with a polyether polyol, as described in U.S. Patent 4,883,832 (Cloetens et al), the disclosure of which is herein incorporated by reference.

Suitable compounds to be used component (b) above, include reactive unsaturated compounds, particularly those that are free radically polymerizable. Some examples of suitable compounds include aliphatic conjugated dienes, monovinylidene aromatic monomers, α,β-ethylenically unsaturated carboxylic acids and esters thereof, α,β-ethylenically unsaturated nitriles and amides, vinyl esters, vinyl ethers, vinyl ketones, vinyl and vinylidene halides and a wide variety of other ethylenically unsaturated materials which are copolymerizable with the aforementioned monomeric adduct or reactive monomer. Such monomers are known in polymer polyol chemistry. Mixtures of two or more of such monomers are suitable herein.

Preferred monomers are the monovinylidene aromatic monomers, particularly styrene, and the ethylenically unsaturated nitriles, particularly acrylonitrile. In particular, it is preferred to utilize acrylonitrile with a comonomer and to maintain a minimum of about 5 to 15 percent by weight acrylonitrile in the system. Styrene is generally preferred as the comonomer, but other monomers may be employed. A most preferred monomer mixture comprises acrylonitrile and styrene. The weight proportion of acrylonitrile can range from about 20 to 80 weight percent of the comonomer mixture, more typically from about 25 to about 55 weight percent, and styrene can accordingly vary from about 80 to about 20 weight percent, more preferably from 75 to 45 weight percent of the mixture.

The free radical polymerization initiators suitable for use as component (c) in the suitable preformed stabilizers of the present invention encompass any free radical catalyst suitable for grafting of an ethylenically unsaturated polymer to a polyol. Examples of suitable free-radical polymerization initiators for the present invention include initiators such as, for example, peroxides including both alkyl and aryl hydro-peroxides, persulfates, perborates, percarbonates, azo compounds, etc. Such catalysts are known in polymer polyol chemistry. Also useful are catalysts having a satisfactory half-life within the temperature ranges used to form the preformed stabilizer, i.e. the half-life should be about 25 percent or less of the residence time in the reactor at a given temperature. Suitable catalysts concentrations range from about 0.01 to about 2% by weight, preferably from about 0.05 to 1% by weight, and most preferably 0.05 to 0.3% by weight, based on the total weight of the components (i.e. 100% by weight of the PFS). The particular catalyst concentration selected will usually be an optimum value considering all factors, including costs.

In accordance with the present invention, a polymer control agent (d) in which components (a), (b), and (c) of the pre-formed stabilizer are soluble, but in which the resultant preformed stabilizer component is essentially insoluble, is optional. When present, this may be one polymer control agent or a mixture of polymer control agents. Suitable compounds to be used as polymer control agents in accordance with the present invention include various monopoles (i.e. monohydroxy alcohols), aromatic hydrocarbons, ethers, and other liquids. Monools are preferred because of their ease of stripping from the composition. The choice of mono-ol is not narrowly critical, but it should not form two phases at reaction conditions and it should be readily stripped from the final polymer/polyol.

The polyol components suitable as component (e) in the present invention include typically the alkylene oxide adduct of A(OH)_{>3} described above. Though the polyol used as component (e) can encompass the variety of polyols described above, including the broader class of polyols described in U.S. Patent 4,242,249, at column 7, line 39 through column 9, line 10, the disclosure of which is herein incorporated by reference, it is preferred that the polyol component (e) be the same as or equivalent to the polyol used in the formation of precursor used in preparing the preformed stabilizer (PFS). Typically, the polyol need not be stripped off. Because of the number of components, the variability of their concentration in the feed, and the variability of the operating conditions of temperature, pressure, and residence or reaction times, a substantial choice of these is possible while still achieving the benefits of the invention. Therefore, it is prudent to test particular combinations to confirm the most suitable operating mode for producing a particular final polymer polyol product.

The process for producing the preformed stabilizer is similar to the process for making the polymer polyol. The temperature range is not critical and may vary from about 80°C. to about 150°C. or perhaps greater, the preferred range being from 115°C. to 125°C. The catalyst and temperature should be selected so that the catalyst has a reasonable rate of decomposition with respect to the hold-up time in the reactor for a continuous flow reactor or the feed time for a semi-batch reactor.

The mixing conditions employed are those obtained using a back mixed reactor (e.g. a stirred flask or stirred autoclave). The reactors of this type keep the reaction mixture relatively homogeneous and so prevent localized high monomer to macromer ratios such as occur in tubular reactors, where all of the monomer is added at the beginning of the reactor.

The preformed stabilizer of the present invention comprise dispersions in the diluent and any unreacted monomer in which the preformed stabilizer is probably present as individual molecules or as groups of molecules in "micelles," or on the surface of small polymer particles.

Suitable compounds to be used as the ethylenically unsaturated monomers, i.e. component (2) in the present invention include, for example, those ethylenically unsaturated monomers which are known to be useful in polymer polyols. Suitable monomers include, for example, aliphatic conjugated dienes such as butadiene and isoprene; monovinylidene aromatic monomers such as styrene, α-methyl-styrene, (t-butyl)styrene, chlorostyrene, cyanostyrene and bromostyrene; α,β-ethylenically unsaturated carboxylic acids and esters thereof such as acrylic acid, methacrylic acid, methyl methacrylate, ethyl acrylate, 2-hydroxyethyl acrylate, butyl actylate, itaconic acid, maleic anhydride and the like; α,β-ethylenically unsaturated nitriles and amides such as acrylonitrile, methacrylonitrile, acrylamide, methacrylamide, N,N-dimethyl acrylamide, N-(dimethylaminomethyl)acrylamide and the like; vinyl esters such as vinyl acetate; vinyl ethers, vinyl ketones, vinyl and vinylidene halides as well as a wide variety of other ethylenically unsaturated materials which are copolymerizable with the aforementioned monomeric adduct or reactive monomer. It is understood that mixtures of two or more of the aforementioned monomers are also suitable employed in making the pre-formed stabilizer. Of the above monomers, the monovinylidene aromatic monomers, particularly styrene, and the ethylenically unsaturated nitriles, particularly acrylonitrile are preferred. In accordance with this aspect of the present invention, it is preferred that these ethylenically unsaturated monomers include styrene and its derivatives, acrylonitrile, methyl acrylate, methyl methacrylate, vinylidene chloride, with styrene and acrylonitrile being particularly preferred monomers.

It is preferred that styrene and acrylonitrile are used in sufficient amounts such that the weight ratio of styrene to acrylonitrile (S:AN) is from about 80:20 to 40:60, more preferably from about 75:25 to 60:40. These ratios are suitable for polymer polyols and the processes of preparing them, regardless of whether they comprise the ethylenically unsaturated macromers or the pre-formed stabilizers of the present invention.

Overall, the quantity of ethylenically unsaturated monomer(s) present in the polymer polyols comprising a pre-formed stabilizer is at least about 20% by weight, preferably at least about 30% by weight, more preferably at least about 40% by weight, and most preferably at least about 45% by weight, based on 100% by weight of the polymer polyol. The quantity of ethylenically unsaturated monomer(s) present in the polymer polyols is about 65% by weight or less, preferably about 60% by weight or less, more preferably about 59% by weight of less, most preferably about 58% by weight or less and most particularly preferably about 55% by weight or less. The polymer polyols of the present invention typically has a solids content ranging between any combination of these upper and lower values, inclusive, e.g. from 20% to 65% by weight, preferably from 30% to 60% by weight, more preferably from 40% to 59% by weight, most preferably from 45% to 58% by weight, and most particularly preferably from 45% to 55% by weight, based on the total weight of the polymer polyol.

Suitable free-radical initiators to be used as component (4) in the present invention include, for example, those which are known to be suitable for polymer polyols. Examples of suitable free-radical polymerization initiators for the present invention include initiators such as, for example, peroxides including both alkyl and aryl hydroperoxides, persulfates, perborates, percarbonates, azo compounds, etc. Some specific examples include catalysts such as hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxy pivalate, t-amyl peroxy pivalate, t-butyl peroxy-2-ethyl hexanoate, lauroyl peroxide, cumene hydroperoxide, t-butyl hydroperoxide, azobis(isobutyronitrile), 2,2'-azo bis-(2-methylbutyronitrile), etc.

Useful initiators also include, for example, those catalysts having a satisfactory half-life within the temperature ranges used in forming the polymer polyol. Typically, the half-life of the catalyst should be about 25% or less of the residence time in the reactor at any given time. Preferred initiators for this portion of the invention include acyl peroxides such as didecanoyl peroxide and dilauroyl peroxide, alkyl peroxides such as t-butyl peroxy-2-ethylhexanoate, t-butylperpivalate, t-amyl peroxy pivalate, t-amyl peroctoate, 2,5-dimethylhexane-2,5-di-per-2-ethyl hexoate, t-butyl perneodecanoate, t-butylperbenzoate and 1,1-dimethyl-3-hydroxybutyl peroxy-2-ethylhexanoate, and azo catalysts such as azobis(isobutyronitrile), 2,2'-azo bis-(2-methoxyl-butyronitrile), and mixtures thereof. Most preferred are the acyl peroxides described above and the azo catalysts. A particularly preferred initiator comprises azobis(isobutyronitrile). Particularly preferred in the practice of the invention, are the use of azo catalysts and the aforementioned acyl peroxides of the above formula. The preferred acyl peroxides include those which have the unique advantage of effecting the desired degree of polymerization essentially without raising the viscosity of the polymer polyol over that obtained with the azo catalyst. This enhances one's ability to achieve higher solids polymer polyols with good product stability without raising product viscosity. Such acyl peroxides can be used in molar amounts substantially less than the amounts required when using other free radical catalysts in forming the polymer polyols.

Generally speaking, peroxide initiators result in the formation of little to no by-products which can result in solid precipitates in the refining section of a polymer polyol production unit. Such solid by-products are commonly formed by azo initiators such as, for example, AIBN, which forms TMSN (i.e. tetramethyl succinonitrile). Other drawbacks of azo initiators include the toxicity of TMSN and the difficulty of stripping TMSN from the final product (i.e. polymer polyol). When foams are made from polymer polyols which contain an azo initiator, residues of these can escape and may form an undesirable film on nearby surfaces such as, for example, the inside of an automobile windshield. Another problem is that a majority of the peroxide initiators (including most acyl peroxides) raise the viscosity of the resultant polymer polyols. However, this disadvantage is offset by the elimination of TMSN from the resultant polymer polyols.

The quantity of free-radical initiator used herein is not critical and can be varied within wide limits. In general, the amount of initiator ranges from about 0.01 to 2% by weight, based on 100% by weight of the final polymer polyol. Increases in catalyst concentration result in increases in monomer conversion up to a certain point, but past this, further increases do not result in substantial increases in conversion. The particular catalyst concentration selected will usually be an optimum value, taking all factors into consideration including costs.

In addition, the polymer polyol and the process of preparing the polymer polyol may optionally comprise a chain transfer agent, i.e. component (5). The use of chain transfer agents and their nature is known in the art. Chain transfer agents are also commonly referred to as polymer control agents (PCA's), molecular weight regulators and/or reaction moderators. Typically, chain transfer agents serve to control the molecular weight of the polymer polyol.

Suitable chain transfer agents and processes for their preparation are known and described in, for example, U.S. Patents 3,953,393, 4,119,586, 4,463,107, 5,324,774, 5,814,699 and 6,624,209, the disclosures of which are hereby incorporated by reference. Any of the known chain transfer agents may be suitable herein, provided it does not adversely affect the performance of the polymer polyol. Some examples of suitable materials to be used as chain transfer agents include compounds methanol, ethanol, n-propanol, isopropanol, n-butanol, sec-butanol, tert-butanol, n-pentanol, 2-pentanol, 3-pentanol, allyl alcohols, toluene, ethylbenzene, mercaptans including, e.g. dodecylmercaptan, octadecylmercaptan, ethane thiol, toluene thiol, etc., halogenated hydrocarbons such as, e.g. methylene chloride, carbon tetrachloride, carbon tetrabromide, chloroform, etc., amines such as diethylamine, triethylamine, enol-ethers, etc. If used in the present invention, a chain transfer agent is typically present in an amount of from about 0.1 to about 10% by weight, more preferably from about 0.2 to about 8% by weight, based on the total weight of the polymer polyol (prior to stripping).

Preferred chain transfer agents are ethanol, isopropanol, tert-butanol, toluene and ethylbenzene.

The polymer polyols are preferably produced by utilizing a low monomer to polyol ratio which is maintained throughout the reaction mixture during the process. This is achieved by employing conditions that provide rapid conversion of monomer to polymer. In practice, a low monomer to polyol ratio is maintained, in the case of semi-batch and continuous operation, by control of the temperature and mixing conditions and, in the case of semibatch operation, also by slowly adding the monomers to the polyol.

The temperature range is not critical and may vary from about 100°C to about 140°C or perhaps greater, the preferred range being from 115 °C to 125 °C. As has been noted herein, the catalyst and temperature
should be selected so that the catalyst has a reasonable rate of decomposition with respect to the hold-up time in the reactor for a continuous flow reactor or the feed time for a semi-batch reactor.

The mixing conditions employed are those obtained using a back mixed reactor (e.g.-a stirred flask or stirred autoclave). The reactors of this type keep the reaction mixture relatively homogeneous and so prevent localized high monomer to polyol ratios such as occur in tubular reactors when such reactors are operated with all the monomer added to the beginning of the reactor.

The polymer polyols of the present invention comprise dispersions in which the polymer particles (the same being either individual particles or agglomerates of individual particles) are relatively small in size and, in the preferred embodiment, have a weight average size less than about ten microns. However, when high contents of styrene are used, the particles will tend to be larger; but the resulting polymer polyols are highly useful, particularly where the end use application requires as little scorch as possible.

Following polymerization, volatile constituents, in particular any residues of monomers are generally stripped from the product by the usual method of vacuum distillation, optionally in a thin layer of a falling film evaporator. The monomer-free product may be used as is, of may be filtered to remove any large particles that may have been created.

In the preferred embodiment, all of the product (viz. 100%) will pass through the filter employed in the 150 mesh filtration hindrance (filterability) test that will be described in conjunction with the Examples. This ensures that the polymer polyol products can be successfully processed in all types of the relatively sophisticated machine systems now in use for large volume production of polyurethane products, including those employing impingement-type mixing which necessitate the use of filters that cannot tolerate any significant amount of relatively large particles.

In accordance with the present invention, the following materials and processes are suitable for preparation of polyurethane foams from the polymer polyols described above.

Suitable polyisocyanates are known to those skilled in the art and include unmodified isocyanates, modified polyisocyanates, and isocyanate prepolymers. Such organic polyisocyanates include aliphatic, cycloaliphatic, araliphatic, aromatic, and heterocyclic polyisocyanates of the type described, for example, by W. Siefken in Justus Liebigs Annalen der Chemie, 562, pages 75 to 136. Examples of such isocyanates include those represented by the formula (X),

Q(NCO)ₙ (X)

in which
- n: is a number from 2-5, preferably 2-3, and
- Q: is an aliphatic hydrocarbon group containing 2-18, preferably 6-10, carbon atoms; a cycloaliphatic hydrocarbon group containing 4-15, preferably 5-10 carbon atoms; an araliphatic hydrocarbon group containing 8-15, preferably 8-13, carbon atoms; or an aromatic hydrocarbon group containing 6-15, preferably 6-13, carbon atoms.

Examples of suitable isocyanates include ethylene diisocyanate; 1,4-tetramethylene diisocyanate; 1,6-hexamethylene diisocyanate; 1,12-dodecane diisocyanate; cyclobutane-1,3-diisocyanate; cyclohexane-1,3- and -1,4-diisocyanate, and mixtures of these isomers; 1-isocyanato-3,3,5-trimethyl-5-isocyanatomethylcyclohexane (isophorone diisocyanate; e.g. German Auslegeschrift 1,202,785 and U.S. Patent 3,401,190); 2,4- and 2,6-hexahydrotoluene diisocyanate and mixtures of these isomers; dicyclohexylmethane-4,4'-diisocyanate (hydrogenated MDI, or HMDI); 1,3-and 1,4-phenylene diisocyanate; 2,4- and 2,6-toluene diisocyanate and mixtures of these isomers (TDI); diphenylmethane-2,4'- and/or -4,4'-diisocyanate (MDI); naphthylene-1,5-diisocyanate; triphenylmethane-4,4',4"-triisocyanate; polyphenyl-polymethylene-polyisocyanates of the type which may be obtained by condensing aniline with formaldehyde, followed by phosgenation (crude MDI), which are described, for example, in GB 878,430 and GB 848,671; norbornane diisocyanates, such as described in U.S. Patent 3,492,330; m- and p-isocyanatophenyl sulfonylisocyanates of the type described in U.S. Patent 3,454,606; perchlorinated aryl polyisocyanates of the type described, for example, in U.S. Patent 3,227,138; modified polyisocyanates containing carbodiimide groups of the type described in U.S. Patent 3,152,162; modified polyisocyanates containing urethane groups of the type described, for example, in U.S. Patent 3,394,164 and 3,644,457; modified polyisocyanates containing allophanate groups of the type described, for example, in GB 994,890, BE 761,616, and NL 7,102,524; modified polyisocyanates containing isocyanurate groups of the type described, for example, in U.S. Patent 3,002,973, German Patentschriften 1,022,789, 1,222,067 and 1,027,394, and German Offenlegungsschriften 1,919,034 and 2,004,048; modified polyisocyanates containing urea groups of the type described in German Patentschrift 1,230,778; polyisocyanates containing biuret groups of the type described, for example, in German Patentschrift 1,101,394, U.S. Patent 3,124,605 and 3,201,372, and in GB 889,050; polyisocyanates obtained by telomerization reactions of the type described, for example, in U.S. Patent 3,654,106; polyisocyanates containing ester groups of the type described, for example, in GB 965,474 and GB 1,072,956, in U.S. Patent 3,567,763, and in German Patentschrift 1,231,688; reaction products of the above-mentioned isocyanates with acetals as described in German Patentschrift 1,072,385; and polyisocyanates containing polymeric fatty acid groups of the type described in U.S. Patent 3,455,883. It is also possible to use the isocyanate-containing distillation residues accumulating in the production of isocyanates on a commercial scale, optionally in solution in one or more of the polyisocyanates mentioned above. Those skilled in the art will recognize that it is also possible to use mixtures of the polyisocyanates described above.

In general, it is preferred to use readily available polyisocyanates, such as 2,4- and 2,6-toluene diisocyanates and mixtures of these isomers (TDI); polyphenyl-polymethylene-polyisocyanates of the type obtained by condensing aniline with formaldehyde, followed by phosgenation (crude MDI); and polyisocyanates containing carbodiimide groups, urethane groups, allophanate groups, isocyanurate groups, urea groups, or biuret groups (modified polyisocyanates). Isocyanate-terminated prepolymers may also be employed in the preparation of the flexible foams of the present invention. Prepolymers may be prepared by reacting an excess of organic polyisocyanate or mixtures thereof with a minor amount of an active hydrogen-containing compound as determined by the well-known Zerewitinoff test, as described by Kohler in "Journal of the American Chemical Society," 49, 3181(1927). These compounds and their methods of preparation are well known to those skilled in the art. The use of any one specific active hydrogen compound is not critical; any such compound can be employed in the practice of the present invention.

In accordance with the present invention, the isocyanate-reactive component for the polyurethane foams herein comprise a polymer polyol as described above. It is readily apparent that a conventional polyol component such as, for example, polyethers, polyesters, polyacetals, polycarbonates, polyesterethers, polyester carbonates, polyether carbonate polyols, polythioethers, polyamides, polyesteramides, amine-terminated polyethers, polysiloxanes, polybutadienes and polyacetones, polybutadienes, polycaprolactones, as well as conventional polymer polyols, PHD modified polyols and/or PIPA modified polyols which are not based on polyether carbonate polyols; and low molecular weight crosslinkers, chain extenders, and reactive modifiers, etc., and mixtures thereof, etc. may also be present as a portion of the isocyanate-reactive component. It is also readily apparent that natural oil polyols such as those base polyols used or described as being suitable for producing the polymer polyols of the current invention may also be added to the isocyanate reactive component to further increase the renewable content of the foams. Renewable polyols added in this manner do not eliminate the amount of renewable polyol required in the base polyol used in preparation of the polymer polyol component. In accordance with the present invention, the isocyanate-reactive component herein preferably comprises from 5 to 100% by weight of a polymer polyol of the present invention (i.e. a polymer polyol in which the base polyol comprises a natural oil polyol as described hereinabove) and from 0 to 95% by weight of a conventional polyol component, with the sum totaling 100% by weight of the isocyanate-reactive component.

Suitable blowing agents for component (C) of the polyurethane foams herein include but are not limited to compounds such as, for example, water, carbon dioxide, methylene chloride, acetone, fluorocarbons, chlorofluorocarbons, hydrochlorofluorocarbons, perfluorocarbons, and low boiling hydrocarbons. Some examples of suitable hydrochlorofluoro-carbons include compounds such as 1,1-dichloro-1-fluoroethane (HCFC-141b), 1-chloro-1,1-difluoroethane (HCFC-142b), and chlorodifluoro-methane (HCFC-22); of suitable hydrofluoro-carbons include compounds such as 1,1,1,3,3-pentafluoropropane (HFC-245fa), 1,1,1,2-tetrafluoroethane (HFC-134a), 1,1,1,3,3,3-hexafluoro-propane (HFC-236fa), 1,1,2,3,3,3-hexafluoropropane (HFC-236ea), and 1,1,1,4,4,4-hexafluorobutane (HFC-356mffm); of suitable perfluorinated hydrocarbons include compounds such as perfluoropentane or perfluoro-hexane; and of suitable hydrocarbons include compounds such as various isomers of butane, pentane, cyclopentane, hexane, or mixtures of thereof. Water and carbon dioxide are more preferred blowing agents, with water being most preferred.

In accordance with the present invention, the quantity of blowing agent used is typically that which will produce foams having a density as described herein. As one of ordinary skill in the art would know and understand, it is necessary to use a larger quantity of blowing agent to form a lower density foam while a higher density foam requires a smaller quantity of blowing agent. The quantity of blowing used should typically produce foams which have a density of 10 kg/m³ or more, preferably 12 kg/m³ or more, more preferably 15 kg/m³ or more, and most preferably about 18 kg/m³ or more. The quantity of blowing agent used should also typically produce foams which have a density of less than or equal to 200 kg/m³, preferably less than or equal to 100 kg/m³, and more preferably less or equal to 85 kg/m³ and most preferably less than or equal to 70 pcf. The quantity of blowing agent used in the present invention should produce a foam having a density ranging between any combination of these upper and lower values, inclusive, e.g. from at least 10 to 200 kg/m³, preferably from 12 to 100 kg/m³, more preferably from about 15 to 85 kg/m³, and most preferably from about 18 to 70 kg/m³.

Catalysts suitable for the polyurethane foam of the present invention include, for example, amine compounds and organometallic compounds. Suitable examples of such catalysts include tertiary amines, such as triethylamine, tributylamine, N-methylmorpholine, N-ethyl-morpholine, N,N,N',N'-tetramethylethylenediamine, pentamethyl-diethylenetriamine and higher homologues (as described in, for example, DE-A 2,624,527 and 2,624,528), 1,4-diazabicyclo(2.2.2)octane, N-methyl-N'-dimethyl-aminoethylpiperazine, bis-(dimethylaminoalkyl)piperazines, N,N-dimethylbenzylamine, N,N-dimethylcyclohexylamine, N,N-diethyl-benzylamine, bis-(N,N-diethylaminoethyl) adipate, N,N,N',N'-tetramethyl-1,3-butanediamine, N,N-dimethyl-β-phenylethylamine, 1,2-dimethyl-imidazole, 2-methylimidazole, monocyclic and bicyclic amines together with bis-(dialkylamino)alkyl ethers, such as 2,2-bis-(dimethylaminoethyl) ether.

Other suitable catalysts which may be used in producing the inventive polyurethane foams include, for example, organometallic compounds, and particularly, organotin compounds. Organotin compounds which may be considered suitable include those organotin compounds containing sulfur. Such catalysts include, for example, di-n-octyltin mercaptide. Other types of suitable organotin catalysts include, preferably tin(II) salts of carboxylic acids such as, for example, tin(II) acetate, tin(II) octoate, tin(II) ethylhexoate and/or tin(II) laurate, and tin(IV) compounds such as, for example, dibutyltin oxide, dibutyltin dichloride, dibutyltin diacetate, dibutyltin dilaurate, dibutyltin maleate and/or dioctyltin diacetate.

Suitable additives which may optionally be included in the polyurethane forming formulations of the present invention include, for example, foam stabilizers, other catalysts, cell regulators, reaction inhibitors, flame retardants, plasticizers, pigments, fillers, etc.

Foam stabilizers which may be considered preferable for use in the inventive process include, for example, polysiloxanes, polyether siloxanes, and preferably those which are insoluble or have low solubility in water. Compounds such as these are generally of such a structure that copolymers of ethylene oxide and propylene oxide are attached to a polydimethylsiloxane residue. Such foam stabilizers are described in, for example, U.S. Patents 2,834,748, 2,917,480 and 3,629,308, the disclosures of which are hereby incorporated by reference. Other of surface active agents including non-silicone types may also be employed.

Further examples of suitable additives, which may optionally be included in the flexible polyurethane foams of the present invention can be found in Kunststoff-Handbuch, volume VII, edited by Vieweg & Hochtlen, Carl Hanser Verlag, Munich 1993, 3rd Ed., pp. 104 to 127, for example.

The polyurethane foam preferably is a polyurethane flexible foam and which can be produced as moulded foam or even as slabstock foam. The moulded foam can be produced in hot-curing manner or even in cold-curing manner. The invention therefore provides a process for producing the polyurethane foams, the polyurethane foams produced in accordance with this process, and the use thereof for the purpose of producing mouldings, and also the mouldings themselves.

### EXAMPLES

The following compounds and materials were used in the working examples of the present invention:

| | |
|---|---|
| A1-1: | A propylene oxide adduct of glycerin, containing 11wt. % ethylene oxide with a hydroxyl number of 48. |
| A1-2: | A propylene oxide adduct of glycerin, containing 13 wt.% ethylene oxide with a hydroxyl number of 52. |
| A1-3: | A dispersion of styrene/acrylonitrile (67% by wt. / 33% by wt.) co-polymer in polyether polyol prepared by reacting a mixture of styrene and acrylonitrile monomers and preformed stabilizer in a base polyol. The base polyether polyol has a hydroxyl functionality of 3, a hydroxyl number of 52, and an ethylene oxide content of 13% by wt. The polymer polyol has a hydroxyl number of 28.2 and a solids content of 45 wt-%. |
| A1-4: | A propylene oxide adduct of glycerin, containing 14 wt. % carbon dioxide with a hydroxyl number of 52. |
| A2-1: | A stable dispersion of styrene/acrylonitrile particles (about 8 wt. % of total) in a low viscosity polymer control agent |
| A2-2: | 2,2'-Azobis(2-methylbutyronitrile), a free-radical polymerization initiator commercially available as VAZO 67 from E.I. Du Pont de Nemours and Co. |
| A2-3 | Polymer Control agent, isopropanol |
| A3-1 | Tegostab^{®} B 2370, a silicone surfactant, commercially available from Evonik Goldschmidt |
| A3-2 | NIAX A-1, Amine catalyst, commercially available from Momentive Performance Products |
| A3-3 | Addocat^{®} SO, a tin catalyst (stannous(II)ethylhexanoate) commercially available from Rheinchemie Rheinau GmbH |
| A4-1 | Diethanolamine |
| B1-1 | Toluene diisocyanate containing about 80% by weight ot the 2,4-isomer and about 20% by weight of the 2,6-isomer. |
| Viscosity: | Viscosities were measured at 25°C on a Physica MCR 51, manufacturer: Anton Paar at a shear rate of 5 s-1 according to DIN 53018. |
| OH-Number: | The hydroxyl number was determined according to DIN 53240 and is defined as the number of milligrams of potassium hydroxide required for the complete hydrolysis of the fully phthalylated derivative prepared from 1 gram of polyols. |

### POLYMER POLYOL PREPARATION: (Procedure used in Examples 1-6)

The precharge was placed in a 2L glass reactor under nitrogen and heated to 120 °C. The polyol and monomer feeds were pumped into the reactor over 3 hours. The reaction mixture was digested at 120 °C for 1 hour, the residual monomers vacuum stripped, and the product removed from the reactor to give a white liquid polyol with a total solids content of about 30 wt.-%. The semibatch PMPO feeds as set forth in Table 1 were used in the Examples 1-6.

**Table 1. Semibatch PMPO Feeds**

| Example / amount | **1** | **2*⁾** | **3** | **4*⁾** | **5** | **6*⁾** |
|---|---|---|---|---|---|---|
| | **[g]** | **[g]** | **[g]** | **[g]** | **[g]** | **[g]** |
| **Precharge** | | | | | | |
| A1-2 | | 470,5 | | 470,5 | | 470,5 |
| A1-4 | 470,5 | | 470,5 | | 470,5 | |
| | | | | | | |

| **Polyol Feed** | | | | | | |
|---|---|---|---|---|---|---|
| A1-2 | | 154,0 | | 154,0 | | 130,0 |
| A1-4 | 154,0 | | 154,0 | | 130,0 | |
| A2-1 | | | 60,0 | 60,0 | 84,0 | 84,0 |
| A2-2 | 4,05 | 4,05 | 4,05 | 4,05 | 4,05 | 4,05 |
| A2-3 | 60,0 | 60,0 | | | | |

| **Monomer Feed** | | | | | | |
|---|---|---|---|---|---|---|
| A1-2 | | 361,5 | | 361,5 | | 361,5 |
| A1-4 | 361,5 | | 361,5 | | 361,5 | |
| Styrene | 292,5 | 292,5 | 292,5 | 292,5 | 292,5 | 292,5 |
| Acrylonitrile | 157,5 | 157,5 | 157,5 | 157,5 | 157,5 | 157,5 |

| | | | | | | |
|---|---|---|---|---|---|---|
| ^{*)} Comparative Example | | | | | | |

The analytical data of the resulting PMPO products are shown in Table 2.

**Table 2. Analytical data of the resulting PMPOs**

| Example | **1** | **2*⁾** | **3** | **4*⁾** | **5** | **6*⁾** |
|---|---|---|---|---|---|---|
| OH number [mg KOH/g] | 41,5 | | 42,4 | 35,7 | 31,9 | 35,7 |
| Viscosity [mPas] | 14400 | not detectable due to solids coagulation | 16500 | 3675 | 12150 | 1825 |

| | | | | | | |
|---|---|---|---|---|---|---|
| ^{*)} Comparative Example | | | | | | |

In order to test the stability of the PMPO preparation process, the Examples 3 to 6 were repeated twice. The analytical data of these reproduction runs are summarized in Table 3

**Table 3. Analytical data of the repeated PMPOs**

| Example | OH number [mg KOH/g] | Viscosity [mPas] |
|---|---|---|
| **3** | 42,4 | 16500 |
| **3.1** | 43,3 | 15300 |
| **3.2** | 44,6 | 18750 |
| **4*⁾** | 35,7 | 3675 |
| **4.1*⁾** | 35,2 | 1890 |
| **4.2*⁾** | 34,8 | 9300 |
| **5** | 31,9 | 12150 |
| **5.1** | 31,8 | 12100 |
| **5.2** | 31,9 | 12175 |
| **6*⁾** | 35,7 | 1825 |
| **6.1*⁾** | 35,3 | 2520 |
| **6.2*⁾** | 35,0 | 2180 |

| | | |
|---|---|---|
| ^{*)} Comparative Example | | |

The data summarized in Table 3 demonstrate that the use of polyether carbonate polyol A1-4 as the base polyol in the production of PMPOs results in a more stable process compared to the use of the conventional polyether polyol A1-2, as evidenced by the much more consistent viscosity numbers.

### Preparation of the Free-Rise Flexible Foams:

The free-rise flexible foams in Examples 7-12 were prepared by the following procedure:

All the formulation ingredients except for A3-3 catalyst and the isocyanate component were added to a cylindrical container. The contents were mixed at 1400 rpm for 20 seconds with an agitator. A3-3 catalyst was added to the premature and stirred for further 10 seconds. After degassing, the isocyanate component was added with about 8 seconds of mixing remaining. The mixture was then poured into a cardboard box, where it rose freely until the reaction was complete. The freshly prepared bun was cured for 15 minutes in an oven at 120°C and then allowed to cure at ambient conditions for a minimum of 2 days. These samples were then conditioned for at least 16 hours at standard temperature (∼23°C) and humidity (∼50%) before testing for physical and mechanical properties. The foam formulations and the physical/mechanical properties are summarized in Table 4.

The obtained flexible polyurethane slabstock foams (examples 7 to 12) were subject to a visual evaluation. The classification of the flexible polyurethane slabstock foams in terms of cell structure was based on a scale of coarse - medium - fine. Herein, a rank "coarse" means that the foam comprises less than about 5 cells per cm. A rank "medium" means that the foam comprises more than about 5 cells per cm, and comprising less than about 12 cells per cm and a grade "fine" means that the foam comprises more than about 12 cells per cm.

The classification of the quality of the polyurethane slabstock foams was based on a scale of bad - medium - good. Herein, a classification "bad" means that the foam does not have a uniform cell structure and / or visible defects. A classification of "medium" represents that the foam has a generally uniform cell structure with just a few visible defects and a "Good" classification means that the foam has a uniform cell structure with no visible defects.

The inventive polyurethane slabstock foams (Examples 8, 9 and 11) using PMPOs with a polyether carbonate polyol as base polyol (Examples 1, 3 and 5) have similar cell structures and physical/mechanical properties compared to slabstock foams which are made from PMPOs that are based on conventional polyether polyols (Comparative Examples 7, 10 and 12).

**Table 4. Foam Formulations and Foam Property Results**

| | | **7*⁾** | **8** | **9** | **10*⁾** | **11** | **12*⁾** |
|---|---|---|---|---|---|---|---|
| | | | | | | | |
| A1-3 | [pphp] | 44 | | | | | |
| A1-1 | [pphp] | 56 | 33,3 | 33,3 | 33,3 | 33,3 | 33,3 |
| Example 1 | [pphp] | | 66,7 | | | | |
| Example 3 | [pphp] | | | 66,7 | | | |
| Example 4 (Comp.) | [pphp] | | | | 66,7 | | |
| Example 5 | [pphp] | | | | | 66,7 | |
| Example 6 (Comp.) | [pphp] | | | | | | 66,7 |
| Water | [pphp] | 4,50 | 4,50 | 4,50 | 4,50 | 4,50 | 4,50 |
| A3-1 | [pphp] | 1,00 | 1,00 | 1,00 | 1,00 | 1,00 | 1,00 |
| A3-2 | [pphp] | 0,05 | 0,05 | 0,05 | 0,05 | 0,05 | 0,05 |
| A4-1 | [pphp] | 0,10 | 0,10 | 0,10 | 0,10 | 0,10 | 0,10 |
| A3-3 | [pphp] | 0,16 | 0,16 | 0,16 | 0,16 | 0,16 | 0,16 |
| | [pphp] | | | | | | |
| B1-1 | [pphp] | 53,6 | 54,3 | 54,3 | 53,7 | 53,2 | 53,6 |
| | | | | | | | |
| NCO-Index | | 108 | 108 | 108 | 108 | 108 | 108 |
| | | | | | | | |
| Foam Evaluation | | good | good | good | good | good | good |
| Cell structure | | fine | fine | fine | fine | fine | fine |
| Density | [kg/m³] | 23,1 | 23,8 | 23,3 | 23,5 | 23,2 | 23,7 |
| Tensile strength | [kPa] | 101 | 107 | 127 | 113 | 110 | 118 |
| Elongation | [%] | 99 | 77 | 81 | 70 | 83 | 93 |
| CLD¹ (40%/4) | [kPa] | 6,59 | 6,71 | 7,88 | 7,50 | 7,60 | 7,39 |

| | | | | | | | |
|---|---|---|---|---|---|---|---|
| ¹⁾ Compression Load Deflection ^{*)} Comparative Example | | | | | | | |

## Claims

1. A polymer polyol comprising the free-radical polymerization reaction product of:
(1) a base polyol of one or more polyether carbonate polyols,
(2) at least one ethylenically unsaturated monomer,
(3) optionally, a preformed stabilizer,
(4) in the presence of at least one free-radical polymerization initiator, and
(5) optionally, one or more chain transfer agents.

2. The polymer polyol of Claim 1, wherein said base polyol additionally comprises one or more conventional polyol components selected from the group consisting of polyether polyols, polyester polyols and mixtures thereof.

3. The polymer polyol according to Claim 1 or 2, wherein said polyether carbonate polyols (1) are obtained from one or more H-functional starter compounds, one or more alkylene oxides and carbon dioxide in the presence of a double metal cyanide catalyst.

4. The polymer polyol according to Claim 1 or 2, wherein said polyether carbonate polyols (1) are obtained from one or more H-functional starter compounds, one or more alkylene oxides and carbon dioxide in the presence of a double metal cyanide catalyst, wherein
(α) the H-functional starter substance or a mixture of at least two H-functional starter substances is initially introduced into the reaction vessel,
(β) for the activation, a part amount (based on the total amount of the amount of alkylene oxides employed in steps (β) and (γ)) of one or more alkylene oxides is added to the mixture resulting from step (α), it also being possible for step (β) to be carried out several times for the activation,
(γ) one or more alkylene oxides and carbon dioxide are metered continuously into the mixture resulting from step (β) ("copolymerization"), the alkylene oxides employed for the copolymerization being identical to or different from the alkylene oxides employed in step (β).

5. The polymer polyol according to one of Claims 1 to 3, wherein the said polyether carbonate polyols (1) are obtained from one or more H-functional starter compounds, one or more alkylene oxides and carbon dioxide in the presence of a double metal cyanide catalyst, wherein either part of the amount of the H-functional starter compound(s) or the total of the amount of the H-functional starter compound(s) is added together with the alkylene oxides continuously into the reactor in the presence of carbon dioxide and DMC catalyst (CAOS-process).

6. A process for the preparation of a polymer polyol comprising free-radically polymerizing
(1) a base polyol of one or more polyether carbonate polyols,
(2) at least one ethylenically unsaturated monomer,
(3) optionally, a preformed stabilizer,
(4) in the presence of at least one free-radical polymerization initiator, and
(5) optionally, one or more chain transfer agents.

7. The process according to Claim 6, wherein said base polyol additionally comprises one or more conventional polyol components selected from the group consisting of polyether polyols, polyester polyols and mixtures thereof.

8. The process according to Claim 6 or 7, wherein said polyether carbonate polyols (1) are prepared from one or more H-functional starter compounds, one or more alkylene oxides and carbon dioxide in the presence of a double metal cyanide catalyst.

9. The process according to Claim 6 or 7, wherein said polyether carbonate polyols (1) are prepared from one or more H-functional starter compounds, one or more alkylene oxides and carbon dioxide in the presence of a double metal cyanide catalyst, wherein
(α) the H-functional starter substance or a mixture of at least two H-functional starter substances is initially introduced into the reaction vessel,
(β) for the activation, a part amount (based on the total amount of the amount of alkylene oxides employed in steps (β) and (γ)) of one or more alkylene oxides is added to the mixture resulting from step (α), it also being possible for step (β) to be carried out several times for the activation,
(γ) one or more alkylene oxides and carbon dioxide are metered continuously into the mixture resulting from step (β) ("copolymerization"), the alkylene oxides employed for the copolymerization being identical to or different from the alkylene oxides employed in step (β).

10. The process according to one of Claims 6 to 8, wherein the said polyether carbonate polyols (1) are prepared from one or more H-functional starter compounds, one or more alkylene oxides and carbon dioxide in the presence of a double metal cyanide catalyst, wherein either part of the amount of the H-functional starter compound(s) or the total of the amount of the H-functional starter compound(s) is added together with the alkylene oxides continuously into the reactor in the presence of carbon dioxide and DMC catalyst (CAOS-process).

11. The process according to one of Claims 6 to 10, in which the solids content is at least 20% by weight, based on the total weight of the polymer polyol.

12. The process according to one of Claims 6 to 11, wherein (2) said at least one ethylenically unsaturated monomer comprises a mixture of styrene and acrylonitrile in a weight ratio of from about 80:20 to about 40:60.

13. A polyurethane foam comprising the reaction product of:
(A) at least one polyisocyanate component,
with
(B) at least one isocyanate-reactive component which comprises the polymer polyol according to one of Claims 1 to 5,
in the presence of
(C) at least one blowing agent (preferably water), and
(D) at least one catalyst.

14. The polyurethane foam of Claim 13, wherein (B) said isocyanate-reactive component additionally comprises at least one conventional polyol component selected from the group consisting of polyether polyols, polyester polyols and mixtures thereof.

15. A process for the preparation of a polyurethane foam comprising reacting
(A) at least one polyisocyanate component,
with
(B) at least one isocyanate-reactive component which comprises the polymer polyol according to one of Claims 1 to 5,
in the presence of
(C) at least one blowing agent (preferably water),
and
(D) at least one catalyst.

16. The process of Claim 15, wherein (B) said isocyanate-reactive component additionally comprises at least one conventional polyol component selected from the group consisting of polyether polyols, polyester polyols and mixtures thereof.

17. The process of Claim 15 or 16, in which the polyurethane foam is a polyurethane flexible foam
